# EUROPEAN PATENT APPLICATION

(11) **EP 4 134 899 A1**
(43) Date of publication of application: **15.02.2023**
(21) Application number: 21837180.5
(22) Date of filing: 07.07.2021
(51) Int. Cl.: G06Q 30/06, G06Q 50/30

(54) **INFORMATION DISPLAY METHOD, FIRST SERVICE REQUEST TERMINAL, SYSTEM AND ELECTRONIC DEVICE**

(30) Priority: 09.07.2020 CN 202010658800
(71) Applicant: Beijing DiDi Infinity Technology and Development Co., Ltd., Haidian District Beijing 100193 (CN)
(72) Inventor: ZHANG, Tihui, Beijing 100193 (CN); CAO, Yuchu, Beijing 100193 (CN)
(74) Representative: Wang, Bo
(86) International application number: PCT/CN2021/104974
(87) International publication number: WO 2022/007839

(57) **Abstract**

The present disclosure provides a method, a first service requester, a system, and an electronic device for information display. The method may include obtaining a service request location where a first service requester is located when a carpooling request of the first service requester is received; determining dynamic carpooling information of at least one second service requester within a preset distance from the service request location during a carpooling process; and displaying the dynamic carpooling information of the at least one second service requester on a display interface of the first service request terminal. Therefore, the dynamic carpooling information of the at least one second service requester within the preset range from the service request location of the first service requester may be displayed to the first service requester during the time period waiting for the carpooling request of the first service requester to be responded, which can effectively enrich the display content of the service requester terminal, improve the transparency of the relevant information, fill the idle time that the user is waiting, and reduce the probability of the order cancellation.

## Description

### CROSS-REFERENCE TO RELATED APPLICATIONS

This application claims priority of Chinese Patent Application No. 202010658800.8, filed on July 9, 2020, the contents of which are hereby incorporated by reference.

### TECHNICAL FIELD

The present disclosure relates to the field of carpooling technology, and in particular, to methods, first service request terminals, systems, electronic devices, and computer readable storage media for information display.

### BACKGROUND

With the rapid development of Internet technology, more and more users travel by public transportation. The users can determine the public transportation through travel software on smart terminals.

At this stage, after the users submit travel orders on the smart terminals, most of the users are waiting for the background of the travel software to match other users and travel vehicles according to order contents of the travel orders of the users, and continue the travels after the travel orders are successfully matched. In the process of waiting for the travel orders to be matched, the users can not obtain information of the other users and the processing of the travel orders, which can lead to anxiety of the users while waiting for the travel orders to be processed, and reduce the user experience. In addition, the travel orders may be cancelled, thereby affecting the travel efficiency of the users.

### SUMMARY

In view of this, the purpose of the present disclosure is to provide a method, a service requester terminal, a system, and an electronic device for information display. Dynamic carpooling information of at least one second service requester within a preset range from a service request location of a first service requester may be displayed to the first service requester during a time period waiting for a carpooling request to be responded, which can effectively enrich a display content of the service requester terminal, improve transparency of relevant information, fill an idle time that the user is waiting, and reduce a probability of order cancellation.

Some embodiments of the present disclosure provide a method for information display, which is applied to a first service request terminal. The method may include obtaining a service request location where a first service requester is located when a carpooling request of the first service requester is received; determining dynamic carpooling information of at least one second service requester within a preset distance from the service request location during a carpooling process; and displaying the dynamic carpooling information of the at least one second service requester on a display interface of the first service request terminal.

In some embodiments, before displaying the dynamic carpooling information of the at least one second service requester on the display interface of the first service request terminal, the method may include determining, based on the carpooling request of the first service requester and at least one carpooling request of at least one third service requester received within a preset time period when the carpooling request of the first service requester is received, a waiting time for the first service requester to complete the carpooling request of the first service requester, wherein the at least one third service requester includes the at least one second service requester; determining whether the waiting time exceeds a preset time threshold; and in response to determining that the waiting time exceeds the preset time threshold, displaying the dynamic carpooling information on the display interface of the first service request terminal.

In some embodiments, the method may include, in response to determining that the waiting time does not exceed the preset time threshold, displaying a touch control on the display interface of the first service request terminal; and in response to a touch operation on the touch control performed by the first service requester, displaying the dynamic carpooling information on the display interface of the first service request terminal.

In some embodiments, the displaying the dynamic carpooling information of the at least one second service requester on a display interface of the first service request terminal may include determining whether a count of the at least one second service requester exceeds a preset count threshold when the count of the at least one second service requester sent by a server is received; and in response to determining that the count of the at least one second service requester exceeds the preset count threshold, scrolling and displaying the dynamic carpooling information of the at least one second service requester in a form of a bullet screen according to a preset time interval on the display interface of the first service request terminal.

In some embodiments, the method may further include, in response to determining that the count of the at least one second service requester does not exceed the preset count threshold, scrolling and displaying received information in a form of a bullet screen according to the preset time interval on the display interface of the first service request terminal. The received information may include at least one of carpooling rule information, carpooling statistical information, or the dynamic carpooling information of the at least one second service requester.

In some embodiments, after determining the dynamic carpooling information of the at least one second service requester within the preset distance from the service request location during the carpooling process, the method may include determining a first travel route and a first travel time of the first service requester in the carpooling request of the first service requester; determining, based on the dynamic carpooling information, a second service requester whose travel route at least partially overlaps the first travel route and/or a second service requester whose travel time at least partially overlaps the first travel time as a peer service requester; and scrolling and displaying target service information of the peer service requester in a form of a bullet screen on the display interface.

In some embodiments, the scrolling and displaying target service information of the peer service requester in a form of a bullet screen on the display interface may include scrolling and displaying the target service information of the peer service requester in the form of the bullet screen at a second location on the display interface of the first service request terminal, wherein the second location does not correspond to a first location where the dynamic carpooling information is located; or scrolling and displaying the target service information of the peer service requester in the form of the bullet screen at the first location where the dynamic carpooling information is located on the display interface of the first service request terminal, and highlighting the target service information.

In some embodiments, before displaying the dynamic carpooling information of the at least one second service requester on the display interface of the first service request terminal, the method may include determining, based on the dynamic carpooling information, a second travel route and a second travel time of each of the at least one second service requester; determining, based on a screening time and a screening route set by the first service requester, remained dynamic carpooling information by screening at least a portion of the dynamic carpooling information from the dynamic carpooling information, wherein travel times of the at least a portion of the dynamic carpooling information partially overlap the set screening time, or travel routes of the at least a portion of the dynamic carpooling information partially overlap the set screening route; and determining the remained dynamic carpooling information as the dynamic carpooling information of the at least one second service requester that are displayed on the display interface of the first service request terminal.

In some embodiments, the method may further include, in response to determining that the carpooling request of the first service requester is responded, stopping displaying the dynamic carpooling information.

Some embodiments of the present disclosure provide a first service request terminal. The first service request terminal may include a location determination module, an information determination module, and a first display module. The location determination module may be configured to obtain a service request location where a first service requester is located when a carpooling request of the first service requester is received. The information determination module may be configured to determine dynamic carpooling information of at least one second service requester within a preset distance from the service request location during a carpooling process. The first display module may be configured to display the dynamic carpooling information of the at least one second service requester on a display interface of the first service request terminal.

In some embodiments, the first service request terminal may further include a first determination module. The first determination module may be configured to determine, based on the carpooling request of the first service requester and at least one carpooling request of at least one third service requester received within a preset time period when the carpooling request of the first service requester is received, a waiting time for the first service requester to complete the carpooling request of the first service requester, wherein the at least one third service requester includes the at least one second service requester; determine whether the waiting time exceeds a preset time threshold; and in response to determining that the waiting time exceeds the preset time threshold, display the dynamic carpooling information on the display interface of the first service request terminal.

In some embodiments, the first service request terminal may further include a second determination module. The second determination module may be configured to, in response to determining that the waiting time does not exceed the preset time threshold, display a touch control on the display interface of the first service request terminal; and in response to a touch operation on the touch control performed by the first service requester, display the dynamic carpooling information on the display interface of the first service request terminal.

In some embodiments, when the first display module is configured to display the dynamic carpooling information of the at least one second service requester on a display interface of the first service request terminal, the first display module may be configured to determine whether a count of the at least one second service requester exceeds a preset count threshold when the count of the at least one second service requester sent by a server is received; and in response to determining that the count of the at least one second service requester exceeds the preset count threshold, scroll and display the dynamic carpooling information of the at least one second service requester in a form of a bullet screen according to a preset time interval on the display interface of the first service request terminal.

In some embodiments, the first service request terminal may further include a second display module. The second display module may be configured to, in response to determining that the count of the at least one second service requester does not exceed the preset count threshold, scroll and display received information in a form of a bullet screen according to the preset time interval on the display interface of the first service request terminal. The received information may include at least one of carpooling rule information, carpooling statistical information, or the dynamic carpooling information of the at least one second service requester.

In some embodiments, the first service request terminal may further include a peer service requester determination module. The peer service requester determination module may be configured to determine a first travel route and a first travel time of the first service requester in the carpooling request of the first service requester; determine, based on the dynamic carpooling information, a second service requester whose travel route at least partially overlaps the first travel route and/or a second service requester whose travel time at least partially overlaps the first travel time as a peer service requester; and scroll and display target service information of the peer service requester in a form of a bullet screen on the display interface.

In some embodiments, when the peer service requester determination module is configured to scroll and display the target service information of the peer service requester in the form of the bullet screen on the display interface, the peer service requester determination module may be configured to scroll and display the target service information of the peer service requester in the form of the bullet screen at a second location on the display interface of the first service request terminal, wherein the second location does not correspond to a first location where the dynamic carpooling information is located; or scroll and display the target service information of the peer service requester in the form of the bullet screen at the first location where the dynamic carpooling information is located on the display interface of the first service request terminal, and highlighting the target service information.

In some embodiments, the first service request terminal may further include an information screening module. The information screening module may be configured to determine, based on the dynamic carpooling information, a second travel route and a second travel time of each of the at least one second service requester; determine, based on a screening time and a screening route set by the first service requester, remained dynamic carpooling information by screening at least a portion of the dynamic carpooling information from the dynamic carpooling information, wherein travel times of the at least a portion of the dynamic carpooling information partially overlap the set screening time, or travel routes of the at least a portion of the dynamic carpooling information partially overlap the set screening route; and determine the remained dynamic carpooling information as the dynamic carpooling information of the at least one second service requester that are displayed on the display interface of the first service request terminal.

In some embodiments, the first service request terminal may further include a display stopping module. The display stopping module may be configured to, in response to determining that the carpooling request of the first service requester is responded, stop displaying the dynamic carpooling information.

Some embodiments of the present disclosure provide a system for information display. The system may include the above-mentioned first service request terminal, a server, and a plurality of second service request terminals. The first service requester and each of the plurality of second service requesters may be in communication with the server, respectively. The server may be configured to obtain a service request location where the first service request terminal is located when information request sent by the first service request terminal is received, determine a count of at least one second service requester within a preset distance range from the service request location, and send the count of the at least one second service requester to the first service request terminal, simultaneously. The first service request terminal may be configured to determine whether the count of the at least one second service requester exceeds a preset number threshold after the count of the at least one second service requester sent by the server is received; in response to determining that the count of the at least one second service requester exceeds the preset count threshold, send a dynamic carpooling information acquisition instruction to each of the plurality of second service request terminals; and scroll and display dynamic carpooling information of the at least one second service requester in a form of a bullet screen on a display interface of the first service request terminal after the dynamic carpooling information sent by the plurality of second service request terminals is obtained. Each of the plurality of second service request terminals may be configured to determine dynamic carpooling information in a carpooling process of a corresponding second service requester when the dynamic carpooling information acquisition instruction sent by the first service request terminal is received, and send the dynamic carpooling information of the corresponding second service requester to the first service request terminal.

In some embodiments, the first service request terminal may be further configured to determine a request time when each of the at least one second service requester initiates a service request; and scroll and display the dynamic carpooling information of the at least one second service requester in a form of a bullet screen according to an order of the request time of the at least one second service requester on the display interface. In some embodiments, the first service request terminal may be further configured to, in response to determining that the count of the at least one second service requester does not exceed the preset count threshold, send a relevant information request to the server, and scroll and display the relevant information in a form of a bullet screen on the display interface. The relevant information may include at least one of carpooling rule information, carpooling statistical information, or the dynamic carpooling information of the at least one second service requester.

In some embodiments, the server may further be configured to determine the carpooling statistical information based on historical carpooling order information after the relevant information request sent by the first service request terminal is received, and send the carpooling statistical information and the pre-stored carpooling rule information to the first service request terminal.

Some embodiments of the present disclosure provide an electronic device. The electronic device may include a processor, a storage device, and a bus. The storage device may store computer readable instructions executable by the processor. When the electronic device is operated, the processor may be in communication with the storage device through the bus, and the processor may execute the computer readable instructions to perform operations of the above-mentioned method.

Some embodiments of the present disclosure further provide a computer readable storage medium. Computer instructions may be stored on the computer readable storage medium. When executed by at least one processor, the at least one processor may be directed to perform operations of the above-mentioned method.

The method, the service requester terminal, the system, and the electronic device for information display according to some embodiments of the present disclosure may obtain the service request location where the first service requester is located when the carpooling request of the first service requester is received; determine the dynamic carpooling information of the at least one second service requester within the preset distance from the service request location during the carpooling process; and displaying the dynamic carpooling information of the at least one second service requester on the display interface of the first service request terminal.

Therefore, when the carpooling request of the first service requester is received, the service request location where the first service requester sends the carpooling request of the first service requester may be determined. The dynamic carpooling information of the at least one second service requester within the preset distance from the service request location of the first service requester may be determined. Further, the dynamic carpooling information may be displayed on the display interface of the first service request terminal, which can effectively enrich the display content of the first service request terminal, improve the transparency of the relevant information, fill the idle time that the user is waiting, and reduce the probability of the order cancellation.

In order to describe the above-mentioned purposes, features, and advantages of the present disclosure obvious and easy to understand, exemplary embodiments may be described in detail as follows with reference to accompanying drawings.

### BRIEF DESCRIPTION OF THE DRAWINGS

In order to describe technical solutions of the embodiments of the present disclosure more clearly, the following description may briefly introduce the accompanying drawings that need to be used in some embodiments of the present disclosure. It should be noted that, the accompanying drawings in the following description are only examples or embodiments of the present disclosure, and are not intended to limit the scope of the present disclosure. For those skilled in the art, other drawings may be obtained based on the accompanying drawings without creative effort.
FIG. 1 is a schematic diagram illustrating an exemplary structure of a system for information display according to some embodiments of the present disclosure;
FIG. 2 is a flowchart illustrating an exemplary process for information display according to some embodiments of the present disclosure;
FIG. 3 is a flowchart illustrating another exemplary process for information display according to some embodiments of the present disclosure;
FIG. 4 is a schematic diagram illustrating an exemplary display interface of dynamic carpooling information according to some embodiments of the present disclosure;
FIG. 5 is a schematic diagram illustrating an exemplary structure of a first service request terminal according to some embodiments of the present disclosure;
FIG. 6 is a schematic diagram illustrating another exemplary structure of a first service request terminal according to some embodiments of the present disclosure; and
FIG. 7 is a schematic diagram illustrating an exemplary structure of an electronic device according to some embodiments of the present disclosure.

### DETAILED DESCRIPTION

In order to describe the above-mentioned purposes, technical solutions, and advantages of the embodiments of the present disclosure more clearly, the technical solutions in the embodiments of the present disclosure may be clearly and completely described below with reference to the accompanying drawings in the embodiments of the present disclosure. Obviously, the embodiments in the following description are only a portion of the embodiments of the present disclosure, but not all of the embodiments. Components of the embodiments of the present disclosure generally described and illustrated in the drawings herein may be disposed and designed in a variety of different configurations. Thus, the following detailed description of the embodiments of the present disclosure provided in the accompanying drawings is not intended to limit the scope of the present disclosure as claimed, but is merely representative of selected embodiments of the present disclosure. Based on the embodiments of the present disclosure, each other embodiment obtained by those skilled in the art without creative work falls within the protection scope of the present disclosure.

In order to enable those skilled in the art to use the content of the present disclosure, the following embodiments are described with reference to a specific application scenario, i.e., a "dynamic carpooling information display." For those skilled in the art, the general principles defined herein may be applied to other embodiments and application scenarios without departing from the spirit and scope of the present disclosure. Although the present disclosure mainly focuses on displaying the dynamic carpooling information of the at least one second service requester on the service request terminal, it should be understood that this is only an exemplary embodiment.

It should be noted that the terms "comprising" or "including" when used in the present disclosure, specify the presence of stated features, but do not preclude the presence or addition of one or more other features thereof.

The terms "passenger," "requester," "service requester," and "customer" in the present disclosure are used interchangeably to refer to an individual, an entity, or a tool that may request or order a service. The term "user" in the present disclosure may refer to an individual, an entity, or a tool that may request a service, order a service, provide a service, or facilitate the provision of a service. For example, a user may be a passenger, a driver, an operator, or the like, or any combination thereof. In the present disclosure, the terms "passenger" and "passenger terminal" are used interchangeably, and the terms "driver" and "driver terminal" are used interchangeably.

The terms "service request" and "order" are used interchangeably in the present disclosure to refer to a request initiated by a passenger, a service requester, a driver, a service provider, a supplier, or the like, or any combination thereof. A subject that accepts the "service request" or the "order" may be a passenger, a service requester, a driver, a service provider, a supplier, or the like, or any combination thereof. The service request may be paid or free.

The positioning technology used in the present disclosure may be based on global positioning system (GPS), a global navigation satellite system (GLONASS), a compass navigation system (COMPASS), a Galileo positioning system, a quasi-zenith satellite system (QZSS), a wireless fidelity (Wi-Fi) positioning technology, or the like, or any combination thereof. One or more of the above positioning systems may be used interchangeably in the present disclosure.

One aspect of the present disclosure relates to a system for information display. The system may determine a service request location where a first service requester sends a carpooling request when the carpooling request of the first service requester is received. The system may determine dynamic carpooling information of at least one second service requester within a preset distance from the service request location of the first service requester. Further, the system may display the dynamic carpooling information on a display interface of a first service request terminal, which can effectively enrich a display content of the first service request terminal, improve transparency of relevant information, fill an idle time that a user is waiting, and reduce a probability of order cancellation.

It should be noted that, before the present disclosure is filed, at this stage, after users submit travel orders on the smart terminals, most of the users are waiting for the background of the travel software to match other users and travel vehicles according to order contents of the travel orders of the users, and continue the travels after the travel orders are successfully matched. In the process of waiting for the travel orders to be matched, the users can not obtain information of the other users and the processing of the travel orders, which can lead to anxiety of the users while waiting for the travel orders to be processed, and reduce the user experience. In addition, the travel orders may be cancelled, thereby affecting the travel efficiency of the users.

However, the method, the service requester terminal, the system, and the electronic device for information display provided in the present disclosure may display the dynamic carpooling information of the at least one second service requester within the preset range from the service request location of the first service requester to the first service requester during the time period waiting for the carpooling request of the first service requester to be responded, which can effectively enrich the display content of the service requester terminal, improve the transparency of the relevant information, fill the idle time that the user is waiting, and reduce the probability of the order cancellation.

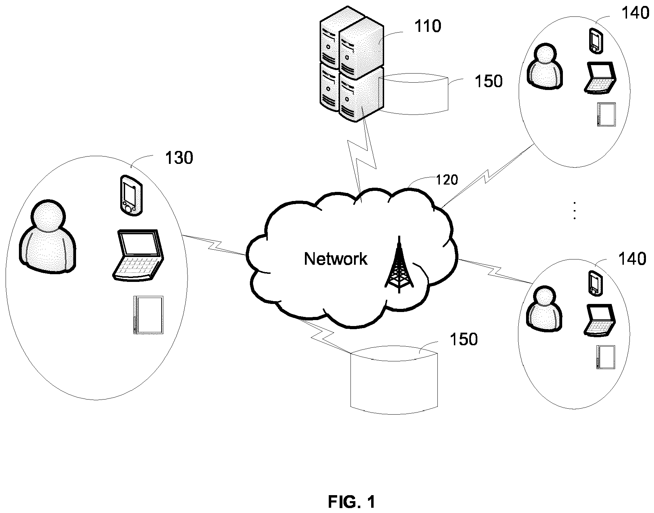

FIG. 1 is a schematic diagram illustrating an exemplary structure of a system for information display according to some embodiments of the present disclosure. For example, the system for information display may be an online transportation service platform for a transportation service such as a taxi service, a chauffeur service, an express car service, a carpooling service, a bus service, a driver rental service, a shuttle service, or the like, or any combination thereof. The system for information display may include a server 110, a network 120, a first service request terminal 130, a plurality of second service request terminals 140, a database 150, or the like, or any combination thereof.

The server 110 may be configured to obtain a service request location where the first service request terminal 130 is located when information request sent by the first service request terminal 130 is received, determine a count of at least one second service requester within a preset distance range from the service request location, and send the count of the at least one second service requester to the first service request terminal 130, simultaneously.

The first service request terminal 130 may be configured to determine whether the count of the at least one second service requester exceeds a preset number threshold after the count of the at least one second service requester sent by the server 110 is received. In response to determining that the count of the at least one second service requester exceeds the preset count threshold, the first service request terminal 130 may send a dynamic carpooling information acquisition instruction to each of a plurality of second service request terminals 140. After the dynamic carpooling information sent by the plurality of second service request terminals 140 is obtained, the first service request terminal 130 may scroll and display dynamic carpooling information of the at least one second service requester in a form of a bullet screen on a display interface of the first service request terminal 130.

Each of the plurality of second service request terminals 140 may be configured to determine dynamic carpooling information in a carpooling process of a corresponding second service requester when the dynamic carpooling information acquisition instruction sent by the first service request terminal 130 is received, and send the dynamic carpooling information of the corresponding second service requester to the first service request terminal 130.

When the information request sent by the first service request terminal 130 is received, the server 110 may obtain the service request location where the first service request terminal 130 is located, determine the count of the at least one second service requesters within the preset distance range of the service request location, and send the determined count to the first service request terminal 130, simultaneously. The first service request terminal 130 may determine whether the count of the at least one second service requester exceeds the preset number threshold based on the received count of the at least one second service requester. In response to determining that the count of the at least one second service requester exceeds the preset count threshold, the first service request terminal 130 may send the dynamic carpooling information acquisition instruction to each of the plurality of second service request terminals 140. Each of the plurality of second service request terminals 140 may determine the dynamic carpooling information of the corresponding second service requester when the dynamic carpooling information acquisition instruction sent by the first service request terminal 130 is received, and send the dynamic carpooling information of the corresponding second service requester to the first service request terminal 130. The first service request terminal 130 may scroll and display the dynamic carpooling information of the at least one second service requester in the form of the bullet screen on the display interface.

In some embodiments, the server 110 may include a processor. The processor may process information and/or data related to the service request to execute one or more functions described in the present disclosure. For example, the processor may determine the service request location where the first service requester is located based on the carpooling request of the first service requester obtained from the first service request terminal 130. In some embodiments, the processor may include one or more processing cores (e.g., single-core processor(s) or multi-core processor(s)). Merely by way of example, the processor may include a central processing unit (CPU), an application specific integrated circuit (ASIC), an application specific instruction-set processor (ASIP), a graphics processing unit (GPU), a physical processing unit (PPU), a digital signal processor (DSP), a field programmable gate array (FPGA), a programmable logic device (PLD), a controller, a microcontroller unit, a reduced instruction set computer (RISC), or a microprocessor, or the like, or any combination thereof.

In some embodiments, a device type corresponding to the first service request terminal 130 may be a mobile device. For example, the mobile device may include a smart home device, a wearable device, a smart mobile device, a virtual reality device, an augmented reality device, etc. As another example, the mobile device may be a tablet computer, a laptop computer, a built-in device in a motor vehicle, etc. In some embodiments, a device type corresponding to the second service request terminal 140 may be a mobile device.

In some embodiments, the database 150 may be connected to the network 120 to communicate with one or more components (e.g., the server 110, the first service request terminal 130, the second service request terminal 140, etc.) in the system for information display. The one or more components in the system for information display may access data or instructions stored in the database 150 via the network 120. In some embodiments, the database 150 may be directly connected to the one or more components in the system for information display. Alternatively, the database 150 may be a portion of the server 110.

In some embodiments, the first service request terminal 130 may be further configured to determine a request time when each of the at least one second service requester initiates a service request; and scroll and display the dynamic carpooling information of the at least one second service requester in the form of the bullet screen according to an order of the request time of the at least one second service requester on the display interface.

For example, the dynamic carpooling information of the at least one second service requester may include the count of the at least one second service requester, a carpooling waiting time of each of the at least one second service requester, and a carpooling time of a second service requester that has carpooled, etc., within the preset distance range of the first service requester.

In some embodiments, the first service request terminal 130 may be further configured to, in response to determining that the count of the at least one second service requester does not exceed the preset count threshold, send a relevant information request to the server 110, and scroll and display the received relevant information in a form of a bullet screen on the display interface. The relevant information may include carpooling rule information, carpooling statistical information, the dynamic carpooling information, or the like, or any combination thereof.

For example, if the count of the at least one second service requester does not exceed the preset count threshold, it may be determined that an information count of the at least one second service requester cannot meet a demand for displaying within the waiting time of the first service requester. At this time, other information may need to be displayed to fill a display gap of the dynamic carpooling information of the at least one second service requester. The carpooling rule information and/or the carpooling statistical information received from the server 110 in the background and the dynamic carpooling information of the at least one second service requester may be scrolled and displayed on the display interface in the form of the bullet screen.

In some embodiments, the server 110 may further be configured to determine the carpooling statistical information based on historical carpooling order information after the relevant information request sent by the first service request terminal 130 is received, and send the carpooling statistical information and the pre-stored carpooling rule information to the first service request terminal.

For example, after the relevant information request sent by the first service request terminal 130 is received, the server 110 may obtain the carpooling rule information provided by a travel software platform from the database 150, and determine (e.g., summarize) the carpooling statistical information according to historical carpooling order data in the database 150. Further, the server 110 may send the carpooling rule information and/or the carpooling statistical information to the first service request terminal 130.

The method for information display provided by some embodiments of the present disclosure may be described in detail below with reference to the content described in the system for information display illustrated in FIG. 1.

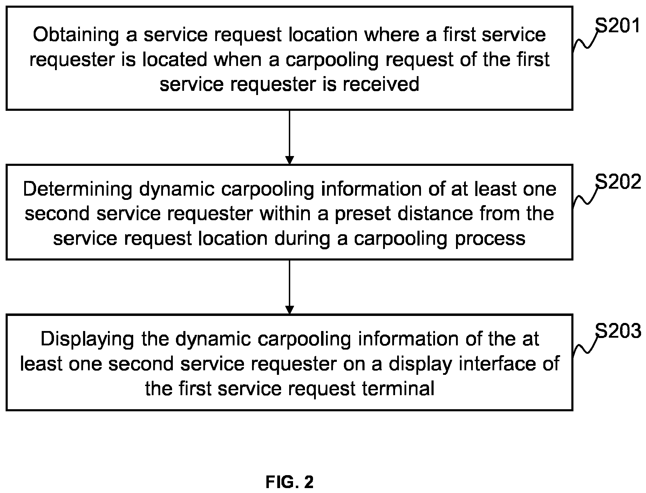

Referring to FIG. 2, FIG. 2 is a flowchart illustrating an exemplary process for information display according to some embodiments of the present disclosure. The process may be executed by a first service request terminal in a system for information display. The process may include following operations.

In S201, a service request location where a first service requester is located may be obtained when a carpooling request of the first service requester is received.

In the operation, when it is determined that the carpooling request of the first service requester is received, the service request location where the first service requester is located may be determined when the first service requester send the carpooling request.

In some embodiments, the determining that the carpooling request of the first service requester is received may refer to that the first service requester opens a car-using software on a service request terminal (e.g., the first service request terminal), fill in a corresponding carpooling order under a carpooling option in the car-using software, and determine that the carpooling request of the first service requester is received after the filled carpooling order is submitted successfully.

Order information in the carpooling order may include a travel destination of the first service requester, a travel time of the first service requester, and identification information (e.g., a nickname, etc.) of the first service requester in the carpooling order.

In some embodiments, when the carpooling request of the first service requester is received, the service request location where the first service requester is located may be determined by a positioning module built in the service request terminal. Alternatively, the service request location may be determined by determining latitude and longitude coordinates of the service request location of the first service requester. Alternatively, the service request location may be further determined by determining a geographic location of a street, a community, etc., where the user is located.

In S202, dynamic carpooling information of at least one second service requester within a preset distance from the service request location may be determined during a carpooling process.

In the operation, the at least one second service requester and the dynamic carpooling information of the at least one second service requester during the carpooling process within the preset distance range from the service request location determined in operation S201 may be determined.

In some embodiments, the preset distance range may refer to an area determined with the service request location as a center of a circle and a preset distance as a radius of the circle. A user who initiates the carpooling request in the area may be considered as one of the at least one second service requester. That is, a count of the at least one second service requester may be one or more.

In some embodiments, the preset distance range may be determined according to a travel route of the first service requester. A carpooling user who is located within a certain distance on the travel route of the first service requester or within a distance range where there is a possibility of successful carpooling may be one of the at least one second service requester. Alternatively, the preset distance range may be determined according to the service request location. For example, if the service request location is a west gate of an XX cell, the preset distance range may be an area where the entire XX cell is located.

In some embodiments, a state of the at least one second service requester may be a passenger who has issued a carpooling request and is waiting for a carpooling, or a passenger who has completed a carpooling order.

The dynamic carpooling information may include a travel time, a travel route, and personal information of the at least one second requester, a waiting time for carpooling, a time consumed for successful carpooling, etc. The dynamic carpooling information may further include a statistic on the at least one second requester within the preset distance range, for example, the count of the at least one second requester waiting for carpooling within the preset distance range, etc.

In some embodiments, the dynamic carpooling information of the at least one second requester may be sent by the server after the service request terminal sends an information acquisition request to the server.

In S203, the dynamic carpooling information of the at least one second service requester may be displayed on a display interface of the first service request terminal.

In the operation, the dynamic carpooling information determined in operation S202 may be displayed on the display interface of the first service request terminal.

In some embodiments, the dynamic carpooling information may be displayed one by one according to an order in which the dynamic carpooling information is obtained. Alternatively, the dynamic carpooling information may be displayed according to a chronological order in which at least one carpooling order is submitted by the at least one second requester.

The method for information display provided by some embodiments of the present disclosure may obtain the service request location where the first service requester is located when the carpooling request of the first service requester is received; determine the dynamic carpooling information of the at least one second service requester within the preset distance from the service request location during the carpooling process; and display the dynamic carpooling information of the at least one second service requester on the display interface of the first service request terminal

Therefore, when the carpooling request of the first service requester is received, the service request location where the first service requester sends the carpooling request may be determined. The dynamic carpooling information of the at least one second service requester within the preset distance from the service request location of the first service requester may be determined. Further, the dynamic carpooling information may be displayed on the display interface of the first service request terminal, which can effectively enrich the display content of the first service request terminal, improve the transparency of the relevant information, fill the idle time that the user is waiting, and reduce the probability of the order cancellation.

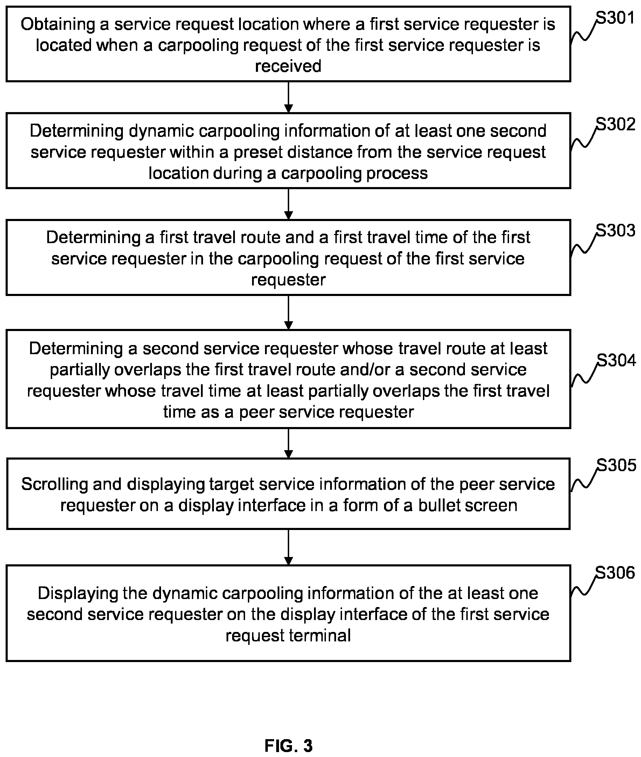

Referring to FIG. 3, FIG. 3 is a flowchart illustrating another exemplary process for information display according to some embodiments of the present disclosure. The process may be executed by a first service request terminal in a system for information display. The process may include following operations.

In S301, a service request location where a first service requester is located may be obtained when a carpooling request of the first service requester is received.

In S302, dynamic carpooling information of at least one second service requester within a preset distance from the service request location during a carpooling process may be determined.

In S303, a first travel route and a first travel time of the first service requester in the carpooling request of the first service requester may be determined.

In the operation, the first travel route and the first travel time of the first service requester may be determined from the carpooling request of the first service requester based on the received carpooling request of the first service requester.

In some embodiments, the first travel route may be determined according to the service request location where the first service requester sends the carpooling request and a travel destination. In addition, the planning of the first travel route may be further determined in combination with the first travel time of the first service requester.

For example, if the first travel time of the first service requester is during the morning rush hour, a congested road section may be avoided when the first travel route is determined.

In some embodiments, the planning of the first travel route may be limited according to a limited condition (e.g., a limit that does not pass through a crowded area) input by the first service requester.

In S304, a second service requester whose travel route at least partially overlaps the first travel route and/or a second service requester whose travel time at least partially overlaps the first travel time may be determined as a peer service requester.

In the operation, a second travel route and a second travel time of each of the at least one second service requester may be determined according to the dynamic carpooling information. The second service requester whose second travel route partially overlaps with the first travel route and the second service requester whose second travel time partially overlaps with the first travel time may be determined. The second service requester that meets the conditions may succeed in carpooling with the first service requester to a large extent. Therefore, the second service requester that meets the conditions may be determined as the peer service requester.

In some embodiments, the partially overlapping between the second travel route and the first travel route may refer to that the first travel route includes the second travel route, or the second travel route includes the first travel route, or the first travel route and the second travel route do not include each other, but partially overlap.

In S305, target service information of the peer service requester may be scrolled and displayed on a display interface in a form of a bullet screen.

In the operation, the target service information of the peer service requester determined in operation S304 may be displayed on the display interface of the first service request terminal.

In some embodiments, the dynamic carpooling information of the target service information may include a travel time, a travel route, and personal information of the peer service requester, a waiting time of carpooling, a time consumed for successful carpooling, etc. The dynamic carpooling information may further include a statistic on the peer service requester within a preset distance range, for example, a count of the peer service requester waiting for carpooling within the preset distance range, etc.

In some embodiments, when the target service information of the peer service requester is displayed, the target service information and the dynamic carpooling information may be distinguished to prompt the first service requester to pay attention to the peer service requester.

In S306, the dynamic carpooling information of the at least one second service requester may be displayed on the display interface of the first service request terminal.

The descriptions of operations S301, S302, and S306 may be referred to the descriptions of operations S201 to S203, and a same technical effect may be achieved, which are not repeated herein.

In some embodiments, before operation S306, the process for information display may further include determining, based on the carpooling request of the first service requester and at least one carpooling request of at least one third service requester received within a preset time period when the carpooling request of the first service requester is received, a waiting time for the first service requester to complete the carpooling request of the first service requester. The at least one third service requester may include the at least one second service requester. The process may include determining whether the waiting time exceeds a preset time threshold. In response to determining that the waiting time exceeds the preset time threshold, the dynamic carpooling information may be displayed on the display interface of the first service request terminal.

In the operation, after the first service requester sends the carpooling request, the waiting time may be determined based on the carpooling request of the first service requester and the at least one carpooling request of the at least one third service requester received within the preset time period where a time point when the carpooling request of the first service requester is received is located. Whether the waiting time exceeds the preset time threshold may be determined. If the waiting time exceeds the preset time threshold, the dynamic carpooling information displayed on the display interface of the first service request terminal may be determined.

In some embodiments, after the carpooling request of the first service requester is received, all carpooling orders received within the time period when the carpool request is received may be determined. The waiting time for the successful carpooling of the first service requester may be determined (e.g., predicted) by comparing a degree of overlap between the first travel route and the first travel time of the first service requester and a third travel route and a third travel time of the at least one third requester.

In some embodiments, in addition to determining a carpooling time (e.g., the waiting time) of the first requester according to the at least one carpooling request of the at least one third requester, the waiting time may be further determined (e.g., predicted) according to a time when a historical carpooling request similar to the carpooling request of the first service requester in the historical carpooling data is responded.

In some embodiments, after whether the waiting time exceeds the preset time threshold is determined, the method for information display may further include, in response to determining that the waiting time does not exceed the preset time threshold, displaying a touch control on the display interface of the first service request terminal; and in response to a touch operation on the touch control performed by the first service requester, displaying the dynamic carpooling information on the display interface of the first service request terminal.

In the operation, if the waiting time does not exceed the preset time threshold, the dynamic carpooling information of the at least one second service requester may not be forcedly pushed. The touch control (e.g., a display touch control) may be displayed on the display interface. In response to the touch operation on the touch control performed by the first service requester, the dynamic carpooling information of the at least one second service requester may be displayed on the display interface of the first service request terminal.

In some embodiments, when the waiting time does not exceed the preset time threshold, the carpooling request of the first service requester may be responded quickly, and the probability that the first service requester cancels the carpooling order may be reduced. At this time, there is no need to display the dynamic carpooling information of the at least one second service requester to occupy an idle time. However, the touch control may be displayed on the display interface of the first service request terminal. The first service requester may independently determine (e.g., choose) whether to display the dynamic carpooling information by operating the touch control. At the same time, for the displayed dynamic carpooling information, the first service requester may also independently determine (e.g., choose) to close the display of the dynamic carpooling information through the touch control.

The touch control may be a sliding selection button, which is divided into an open end and a closed end. The first service requester may control the display of dynamic carpooling information by sliding the sliding selection button.

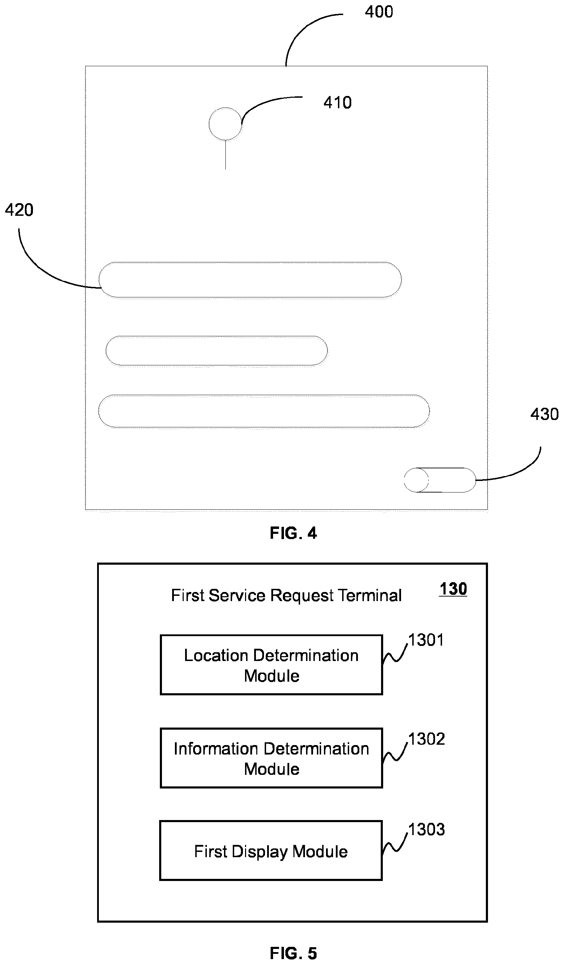

Referring to FIG. 4, FIG. 4 is a schematic diagram illustrating an exemplary display interface of dynamic carpooling information according to some embodiments of the present disclosure. As shown in FIG. 4, after a first service requester sends a carpooling request, a service request location 410 of the first service requester may be determined. The service request location 410 may be displayed on a display interface 400 of the first service request terminal. Dynamic carpooling information of the second service requester within a preset distance range from the service request location 410 may be determined during a carpooling process. At the same time, the dynamic carpooling information may be scrolled and displayed on the display interface 400 by a bullet screen 420. While the dynamic carpooling information is displayed, a touch control 430 may be displayed at a lower right corner of the display interface 400. The first service requester may control the display and hiding of the bullet screen 420 on the display interface 400 by touching the touch control 430.

In some embodiments, operation S306 may include, when the count of the at least one second service requester sent by the server is received, determining whether the count of the at least one second service requester exceeds the preset number threshold. If the count of the at least one second service requester exceeds the preset number threshold, the dynamic carpooling information of the at least one second service requester may be scrolled and displayed in a form of a bullet screen at the preset time interval on the display interface of the first service request terminal.

In the operation, whether the count of the at least one second service requester exceeds the preset number threshold may be determined according to the received count of the at least one second service requester. If the count of the at least one second service requester exceeds the preset number threshold, based on a time when a carpooling request of each of the at least one second service requester is received, the dynamic carpooling information of the at least one second service requester may be displayed on the display interface of the first service request terminal according to a time sequence and a preset time interval.

In some embodiments, the dynamic carpooling information of the at least one second service requester may include the count of the at least one second service requester, a carpooling waiting time of each of the at least one second service requester, and/or a carpooling time of a second service requester that has carpooled, etc., within the preset distance range of the first service requester.

For example, displayed information of a carpooling waiting time of each of the at least one second service requester may be "the passenger with the tail number XXX has waited with you for T time." As another example, displayed information of a carpooling time of a second service requester that has carpooled may be "before time T, the passenger with the tail number YYY waited for time Y has successfully carpooled."

In some embodiments, the bullet screen may be displayed at the preset time interval. When a next bullet screen is displayed, a transparency of a previous bullet screen that has been displayed may be reduced and processed transparently. In addition, a count of bullet screens displayed within a visible range of the display interface of the first service request terminal may be limited. When the count of bullet screens that are displayed reaches an upper limit, and a new bullet screen is displayed, the display of a first bullet screen in the original bullet screen information may need to be stopped.

For example, a count of bullet screens displayed within the visible range of the display interface of the first service request terminal may be at most three. After the count of bullet screens is more than three, a first bullet screen may disappear, and a new bullet screen may appear, and so on, in a continuous cycle.

In some embodiments, after determining whether the count of the at least one second service requester exceeds the preset count threshold when the count of the at least one second service requester sent by the server is received, the method for information display may include, in response to determining that the count of the at least one second service requester does not exceed the preset count threshold, scrolling and displaying received information in a form of a bullet screen according to the preset time interval on the display interface of the first service request terminal. The received information may include carpooling rule information, carpooling statistic information, the dynamic carpooling information of the at least one second service requester, or the like, or any combination thereof.

In the operation, if the count of the at least one second service requester does not exceed the preset count threshold, it may be determined that an information count of the at least one second service requester cannot meet a demand for displaying within the waiting time of the first service requester. At this time, other information may need to be displayed to fill a display gap of the dynamic carpooling information of the at least one second service requester. The carpooling rule information and the carpooling statistical information received from the server in the background and the dynamic carpooling information of the at least one second service requester may be scrolled and displayed on the display interface in the form of the bullet screen.

In some embodiments, a display order of the carpooling rule information, the carpooling statistical information, and the dynamic carpooling information may refer to that the dynamic carpooling information is displayed one by one first. After all the dynamic carpooling information is displayed, the carpooling rule information may be displayed. After the carpooling rule information is displayed, the carpooling statistical information may be displayed.

In some embodiments, the carpooling rule information may be carpooling rule information provided by a travel software platform. The carpooling statistical information may be summarized by the server based on historical carpooling order data. Alternatively, the carpooling statistical information may include a statistic of carpooling information of service requesters in other areas when the first service requester sends the carpooling request. Further, the carpooling statistical information may include carpooling anecdotes, for example, "M city is the best city for carpooling, and N city has X people carpooling every day," etc.

In some embodiments, operation S305 may include scrolling and displaying the target service information of the peer service requester in the form of the bullet screen at a second location on the display interface of the first service request terminal, wherein the second location does not correspond to a first location where the dynamic carpooling information is located; or scrolling and displaying the target service information of the peer service requester in the form of the bullet screen at the first location where the dynamic carpooling information is located on the display interface of the first service request terminal, and highlighting the target service information.

In the operation, after the target service information is determined in operation S304, the target service information and other dynamic carpooling information may be distinguished to display. For example, the target service information and the other dynamic carpooling information may be displayed at different locations on the display interface. As another example, the target service information and the other dynamic carpooling information may be displayed at a same location, but the dynamic carpooling information may be highlighted.

In some embodiments, the target service information and the dynamic carpooling information may be displayed at different locations. Two different locations may be distributed left and right on the display interface. Alternatively, the two different locations may be distributed upper and lower on the display interface.

In some embodiments, the highlighting the target service information may include enlarging a font of the bullet screen corresponding to the target service information, marking a background color of the bullet screen corresponding to the target service information with a prominent color (e.g., red), etc.

In some embodiments, when the target service information is displayed together with the other dynamic carpooling information, target service information and the dynamic carpooling information may be interspersed and displayed according to a sequential order of a service request time of the target service information and a service request time of the other dynamic carpooling information. Alternatively, the target service information may be displayed within a certain time period during the process of displaying the dynamic carpooling information according to the request time. After all the target service information is displayed, the dynamic carpooling information may be continued to display again.

In some embodiments, before operation S306, the method for information display may further include determining, based on the dynamic carpooling information, a second travel route and a second travel time of each of the at least one second service requester; determining, based on a screening time and a screening route set by the first service requester, remained dynamic carpooling information by screening at least a portion of the dynamic carpooling information from the dynamic carpooling information, wherein travel times of the at least a portion of the dynamic carpooling information partially overlap the set screening time, or travel routes of the at least a portion of the dynamic carpooling information partially overlap the set screening route; and determining the remained dynamic carpooling information as the dynamic carpooling information of the at least one second service requester that are displayed on the display interface of the first service request terminal.

In the operation, the second travel route and the second travel time of each of the at least one second service requester may be determined based on the obtained dynamic carpooling information, and the screening time and the screening route set by the first service requester may be obtained. The at least a portion of the dynamic carpooling information whose travel time partially overlaps with the set screening time or whose travel route partially overlaps with the set screening route may be screened. That is, the at least a portion of the dynamic carpooling information may not be displayed. The remained dynamic carpooling information may be displayed on the display interface.

In some embodiments, the first service requester may set a screening condition according to actual carpooling needs of the first service requester to screen a portion of the at least one second service requester. The screening condition may be a route that the first service requester does not want to pass through during the travel, or a time limit for the first service requester not to carpool with users at a special time point.

In some embodiments, in addition to using the travel time and the travel route to screen the users, the users may also be screened according to user information. For example, a girl who goes out in the middle of the night may set a condition for not carpooling with a man from a restaurant.

In some embodiments, after operation S306, the method for information display may further include, in response to determining that the carpooling request of the first service requester is responded, stopping displaying the dynamic carpooling information.

In the operation, if the carpooling request of the first service requester is responded, the dynamic carpooling information of the at least one second service requester may be stopped from being displayed.

In some embodiments, after the display of the dynamic carpooling information of the at least one second service requester is stopped, information of a service provider may be displayed again at a specific location on the display interface to prompt information of a vehicle that the first service requester is about to take and information of the driver providing the service.

The method for information display provided by some embodiment of the present disclosure may obtain the service request location where a first service requester is located when the carpooling request of the first service requester is received; determining the dynamic carpooling information of the at least one second service requester within the preset distance from the service request location during the carpooling process; determining the first travel route and the first travel time of the first service requester in the carpooling request of the first service requester; determining, based on the dynamic carpooling information, the second service requester whose travel route at least partially overlaps the first travel route and/or the second service requester whose travel time at least partially overlaps the first travel time as the peer service requester; and scrolling and displaying target service information of the peer service requester in the form of the bullet screen on the display interface. The dynamic carpooling information of the at least one second service requester may be displayed on the display interface of the first service request terminal.

Therefore, when the carpooling request of the first service requester is received, the service request location where the first service requester sends the carpooling request may be determined. The dynamic carpooling information generated during the carpooling process by the at least one second service requester within the preset distance rang from the service request location may be determined. The dynamic carpooling information may be displayed on the display interface of the service request terminal, and the peer service information who may succeed in carpooling may be specially displayed, which can effectively enrich the display content of the first service request terminal, improve the transparency of the relevant information, fill the idle time that the user is waiting, and reduce the probability of the order cancellation.

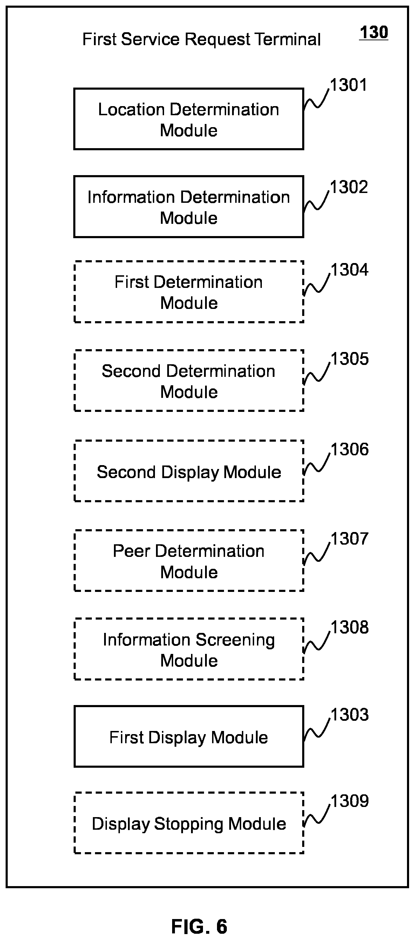

Referring to FIG. 5 and FIG. 6, FIG. 5 is a schematic diagram illustrating an exemplary structure of a first service request terminal according to some embodiments of the present disclosure. FIG. 6 is a schematic diagram illustrating another exemplary structure of a first service request terminal according to some embodiments of the present disclosure. As shown in FIG. 5, the first service request terminal 130 may include a location determination module 1301, an information determining module 1302, and a first display module 1303.

The location determination module 1301 may be configured to obtain a service request location where a first service requester is located when a carpooling request of the first service requester is received.

The information determination module 1302 may be configured to determine dynamic carpooling information of at least one second service requester within a preset distance from the service request location during a carpooling process.

The first display module 1303 may be configured to display the dynamic carpooling information of the at least one second service requester on a display interface of the first service request terminal.

In some embodiments, as shown in FIG. 6, the first service request terminal 130 may further include a first determination module 1304. The first determination module 1304 may be configured to:
determine, based on the carpooling request of the first service requester and at least one carpooling request of at least one third service requester received within a preset time period when the carpooling request of the first service requester is received, a waiting time for the first service requester to complete the carpooling request of the first service requester. The at least one third service requester may include the at least one second service requester.

The first determination module 1304 may be configured to determine whether the waiting time exceeds a preset time threshold.

In response to determining that the waiting time exceeds the preset time threshold, the first determination module 1304 may be configured to display the dynamic carpooling information on the display interface of the first service request terminal.

In some embodiments, as shown in FIG. 6, the first service request terminal 130 may further include a second determination module 1305. The second determination module 1305 may be configured to:
in response to determining that the waiting time does not exceed the preset time threshold, display a touch control on the display interface of the first service request terminal.

In response to a touch operation on the touch control performed by the first service requester, the second determination module 1305 may be configured to display the dynamic carpooling information on the display interface of the first service request terminal.

In some embodiments, as shown in FIG. 6, the first service request terminal 130 may further include a second display module 1306. The second display module 1306 may be configured to, in response to determining that the count of the at least one second service requester does not exceed the preset count threshold, scroll and display received information in a form of a bullet screen according to the preset time interval on the display interface of the first service request terminal.

The received information may include carpooling rule information, carpooling statistical information, the dynamic carpooling information of the at least one second service requester, or the like, or any combination thereof.

In some embodiments, as shown in FIG. 6, the first service request terminal 130 may further include a peer service requester determination module 1307. The peer service requester determination module 1307 may be configured to:
determine a first travel route and a first travel time of the first service requester in the carpooling request of the first service requester.

The peer service requester determination module 1307 may be configured to determine, based on the dynamic carpooling information, a second service requester whose travel route at least partially overlaps the first travel route and/or a second service requester whose travel time at least partially overlaps the first travel time as a peer service requester.

The peer service requester determination module 1307 may be configured to scroll and display target service information of the peer service requester in a form of a bullet screen on the display interface.

In some embodiments, as shown in FIG. 6, the first service request terminal 130 may further include an information screening module 1308. The information screening module 1308 may be configured to:
determine, based on the dynamic carpooling information, a second travel route and a second travel time of each of the at least one second service requester.

The information screening module 1308 may be configured to determine, based on a screening time and a screening route set by the first service requester, remained dynamic carpooling information by screening at least a portion of the dynamic carpooling information from the dynamic carpooling information. Travel times of the at least a portion of the dynamic carpooling information may partially overlap with the set screening time, or travel routes of the at least a portion of the dynamic carpooling information may partially overlap with the set screening route. The information screening module 1308 may be configured to determine the remained dynamic carpooling information as the dynamic carpooling information of the at least one second service requester that are displayed on the display interface of the first service request terminal.

In some embodiments, as shown in FIG. 6, the first service request terminal 130 may further include a display stopping module 1309. The display stopping module 1309 may be configured to:
in response to determining that the carpooling request of the first service requester is responded, stop displaying the dynamic carpooling information.

In some embodiments, when the first display module 1303 is configured to display the dynamic carpooling information of the at least one second service requester on a display interface of the first service request terminal, the first display module 1303 may be configured to:
determine whether a count of the at least one second service requester exceeds a preset count threshold when the count of the at least one second service requester sent by a server is received.

In response to determining that the count of the at least one second service requester exceeds the preset count threshold, the first display module 1303 may be configured to scroll and display the dynamic carpooling information of the at least one second service requester in a form of a bullet screen according to a preset time interval on the display interface of the first service request terminal.

In some embodiments, when the peer service requester determination module 1307 is configured to scroll and display the target service information of the peer service requester in the form of the bullet screen on the display interface, the peer service requester determination module 1307 may be configured to:
scroll and display the target service information of the peer service requester in the form of the bullet screen at a second location on the display interface of the first service request terminal, wherein the second location does not correspond to a first location where the dynamic carpooling information is located.

Alternatively, the peer service requester determination module 1307 may be configured to scroll and display the target service information of the peer service requester in the form of the bullet screen at the first location where the dynamic carpooling information is located on the display interface of the first service request terminal, and highlighting the target service information.

The first service request terminal for information display provided by some embodiments of the present disclosure may obtain the service request location where the first service requester is located when the carpooling request of the first service requester is received; determine the dynamic carpooling information of the at least one second service requester within the preset distance from the service request location during the carpooling process; and display the dynamic carpooling information of the at least one second service requester on the display interface of the first service request terminal

Therefore, when the carpooling request of the first service requester is received, the service request location where the first service requester sends the carpooling request may be determined. The dynamic carpooling information of the at least one second service requester within the preset distance from the service request location of the first service requester may be determined. Further, the dynamic carpooling information may be displayed on the display interface of the first service request terminal, which can effectively enrich the display content of the first service request terminal, improve the transparency of the relevant information, fill the idle time that the user is waiting, and reduce the probability of the order cancellation.

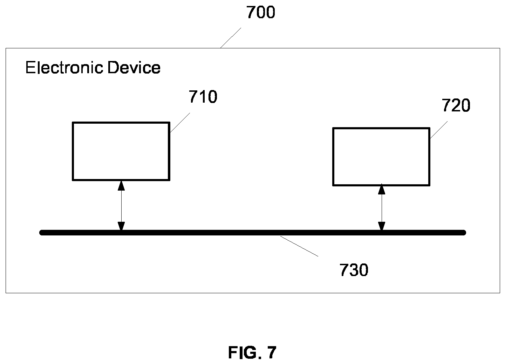

Referring to FIG. 7, FIG. 7 is a schematic diagram illustrating an exemplary structure of an electronic device according to some embodiments of the present disclosure. As shown in FIG. 7, an electronic device 700 may include a processor 71, a storage device 720, and a bus 730.

The storage device 720 may store computer readable instructions executable by the processor 710. When the electronic device 700 is operated, the processor 710 may be in communication with the storage device 720 through the bus 730. The processor 710 may execute the computer readable instructions to perform operations of the method for information display described in FIGs. 2 and 3.

Some embodiments of the present disclosure further provide a computer readable storage medium. Computer instructions may be stored on the computer readable storage medium. When executed by at least one processor, the at least one processor may be directed to perform operations of the method for information display described in FIGs. 2 and 3. The specific implementation may be referred to the embodiments of the method for information display, which is not be repeated herein.

Those skilled in the art can clearly understand that, for the convenience and brevity of description, specific operational processes of the above-described systems, devices, and units may refer to the corresponding processes in the embodiments of the method for information display, which are not repeated herein.

In the several embodiments provided in the present disclosure, it should be understood that the disclosed system, device, and method may be implemented in other manners. The embodiments of the above-described device are only for illustration. For example, the division of units is only a logical function division. In actual implementation, the division may be other division manners. As another example, multiple units or components may be combined or integrated into another system. Alternatively, some features may be omitted, or may not be implemented. On the other hand, the illustrated or discussed mutual coupling or direct coupling or communication connection may be indirect coupling or communication connection through some communication interfaces, devices, or units, and may be in a form of electrical, mechanical, etc.

The units described as separate components may or may not be physically separated. Components shown as units may or may not be physical units. That is, the units may be located in one place, or may be distributed to multiple network units. The purpose of the embodiments in the present disclosure may be implemented by selecting a portion of units or all units in accordance with the actual needs.

In addition, each functional unit in each embodiment of the present disclosure may be integrated into one processing unit. Alternatively, each unit may physically exist individually, or two or more units may be integrated into one unit.

If the functions are implemented in the form of software functional units and sold or used as stand-alone products, the functions may be stored in a processor-executable non-volatile computer-readable storage medium. Based on this understanding, the technical solutions of the present disclosure in essence, or a portion that make contributions to the prior art, or a portion of the technical solutions can be embodied in the form of software products. The computer software product can be stored in a storage medium, and include several instructions for causing a computer device (e.g., a personal computer, a server, a network device, etc.) to execute all or a portion of the operations of the methods described in some embodiments of the present disclosure. The above-mentioned storage medium may include a U disk, a mobile hard disk, a read-only memory (ROM), a random access memory (RAM), a magnetic disk, an optical disk, or other media that can store program codes.

In closing, it should be noted that the embodiments are only specific implementations of the present disclosure, and are illustrative of the technical solutions of the present disclosure, but not of limitation. The protection scope of the present disclosure is not limited thereto, although the present disclosure has been described in detail with reference to the embodiments, those skilled in the art should understand that any skilled in the art who is familiar with the technical scope of the present disclosure can still modify or easily conceive of modifications to the technical solutions described in the embodiments, or perform equivalent replacements to a portion of the technical features. However, these modifications, alterations, or substitutions do not make the essence of the corresponding technical solutions depart from the spirit and scope of the technical solutions of the embodiments of the present disclosure, and should be within the protection scope of the present disclosure. Therefore, the protection scope of the present disclosure should be subject to the protection scope of the claims.

## Claims

1. A method for information display, implemented on a first service request terminal, comprising:
obtaining a service request location where a first service requester is located when a carpooling request of the first service requester is received;
determining dynamic carpooling information of at least one second service requester within a preset distance from the service request location during a carpooling process; and
displaying the dynamic carpooling information of the at least one second service requester on a display interface of the first service request terminal.

2. The method of claim 1, wherein before displaying the dynamic carpooling information of the at least one second service requester on the display interface of the first service request terminal, the method includes:
determining, based on the carpooling request of the first service requester and at least one carpooling request of at least one third service requester received within a preset time period when the carpooling request of the first service requester is received, a waiting time for the first service requester to complete the carpooling request of the first service requester, wherein the at least one third service requester includes the at least one second service requester;
determining whether the waiting time exceeds a preset time threshold; and
in response to determining that the waiting time exceeds the preset time threshold, displaying the dynamic carpooling information on the display interface of the first service request terminal.

3. The method of claim 2, further comprising:
in response to determining that the waiting time does not exceed the preset time threshold, displaying a touch control on the display interface of the first service request terminal; and
in response to a touch operation on the touch control performed by the first service requester, displaying the dynamic carpooling information on the display interface of the first service request terminal.

4. The method of claim 1, wherein the displaying the dynamic carpooling information of the at least one second service requester on a display interface of the first service request terminal includes:
determining whether a count of the at least one second service requester exceeds a preset count threshold when the count of the at least one second service requester sent by a server is received; and
in response to determining that the count of the at least one second service requester exceeds the preset count threshold, scrolling and displaying the dynamic carpooling information of the at least one second service requester in a form of a bullet screen according to a preset time interval on the display interface of the first service request terminal.

5. The method of claim 4, further comprising:
in response to determining that the count of the at least one second service requester does not exceed the preset count threshold, scrolling and displaying received information in a form of a bullet screen according to the preset time interval on the display interface of the first service request terminal, wherein the received information includes at least one of carpooling rule information, carpooling statistical information, or the dynamic carpooling information of the at least one second service requester.

6. The method of claim 1, wherein after determining the dynamic carpooling information of the at least one second service requester within the preset distance from the service request location during the carpooling process, the method includes:
determining a first travel route and a first travel time of the first service requester in the carpooling request of the first service requester;
determining, based on the dynamic carpooling information, a second service requester whose travel route at least partially overlaps the first travel route and/or a second service requester whose travel time at least partially overlaps the first travel time as a peer service requester; and
scrolling and displaying target service information of the peer service requester in a form of a bullet screen on the display interface.

7. The method of claim 6, wherein the scrolling and displaying target service information of the peer service requester in a form of a bullet screen on the display interface includes:
scrolling and displaying the target service information of the peer service requester in the form of the bullet screen at a second location on the display interface of the first service request terminal, wherein the second location does not correspond to a first location where the dynamic carpooling information is located; or
scrolling and displaying the target service information of the peer service requester in the form of the bullet screen at the first location where the dynamic carpooling information is located on the display interface of the first service request terminal, and highlighting the target service information.

8. The method of claim 1, wherein before displaying the dynamic carpooling information of the at least one second service requester on the display interface of the first service request terminal, the method includes:
determining, based on the dynamic carpooling information, a second travel route and a second travel time of each of the at least one second service requester;
determining, based on a screening time and a screening route set by the first service requester, remained dynamic carpooling information by screening at least a portion of the dynamic carpooling information from the dynamic carpooling information, wherein travel times of the at least a portion of the dynamic carpooling information partially overlap the set screening time, or travel routes of the at least a portion of the dynamic carpooling information partially overlap the set screening route; and
determining the remained dynamic carpooling information as the dynamic carpooling information of the at least one second service requester that are displayed on the display interface of the first service request terminal.

9. The method of claim 1, further comprising:
in response to determining that the carpooling request of the first service requester is responded, stopping displaying the dynamic carpooling information.

10. A first service request terminal, comprising:
a location determination module configured to obtain a service request location where a first service requester is located when a carpooling request of the first service requester is received;
an information determination module configured to determine dynamic carpooling information of at least one second service requester within a preset distance from the service request location during a carpooling process; and
a first display module configured to display the dynamic carpooling information of the at least one second service requester on a display interface of the first service request terminal.

11. A system for information display, comprising:
the first service request terminal as claimed in claim 10, a server, and a plurality of second service request terminals, the first service requester and each of the plurality of second service requesters being in communication with the server, respectively; wherein
the server is configured to obtain a service request location where the first service request terminal is located when information request sent by the first service request terminal is received, determine a count of at least one second service requester within a preset distance range from the service request location, and send the count of the at least one second service requester to the first service request terminal, simultaneously;
the first service request terminal is configured to:
determine whether the count of the at least one second service requester exceeds a preset number threshold after the count of the at least one second service requester sent by the server is received;
in response to determining that the count of the at least one second service requester exceeds the preset count threshold, send a dynamic carpooling information acquisition instruction to each of the plurality of second service request terminals; and
scroll and display dynamic carpooling information of the at least one second service requester in a form of a bullet screen on a display interface of the first service request terminal after the dynamic carpooling information sent by the plurality of second service request terminals is obtained; and
each of the plurality of second service request terminals is configured to determine dynamic carpooling information in a carpooling process of a corresponding second service requester when the dynamic carpooling information acquisition instruction sent by the first service request terminal is received, and send the dynamic carpooling information of the corresponding second service requester to the first service request terminal.

12. An electronic device, comprising a processor, a storage device, and a bus, wherein the storage device stores computer readable instructions executable by the processor, and when the electronic device is operated, the processor is in communication with the storage device through the bus, and the processor executes the computer readable instructions to perform operations of the method according to any one of claims 1 to 9.

13. A computer readable storage medium, comprising computer instructions stored on the computer readable storage medium, when executed by at least one processor, direct the at least one processor to perform operations of the method according to any one of claims 1 to 9.
